**Europäisches Patentamt**

**European Patent Office**

**Office européen des brevets**

(19)

(11) Veröffentlichungsnummer: **0 041 165**

**A1**

(12) # EUROPÄISCHE PATENTANMELDUNG

(21) Anmeldenummer: **81103768.8**

(22) Anmeldetag: **16.05.81**

(51) Int. Cl.³: **B 23 K 9/28**

(30) Priorität: **24.05.80 DE 3019966**

(43) Veröffentlichungstag der Anmeldung:
**09.12.81 Patentblatt 81/49**

(84) Benannte Vertragsstaaten:
**AT BE CH FR GB IT LI NL SE**

(71) Anmelder: **Alexander Binzel GmbH & Co. KG**
**Postfach 51 29**
**D-6300 Giessen(DE)**

(72) Erfinder: **Pache, Norbert**
**Zusmarshauser Weg 7A**
**D-8900 Augsburg(DE)**

(72) Erfinder: **Rothörl, Elmar**
**Eberlestrasse 12**
**D-8904 Friedberg(DE)**

(74) Vertreter: **Hann, Michael, Dr. et al,**
**Patentanwälte Dr. Michael Hann Dr. H.-G. Sternagel**
**Marburger Strasse 38**
**D-6300 Giessen(DE)**

(54) **Schutzgasschweissbrenner.**

(57) Gegenstand der Erfindung ist ein Schutzgasschweiß-brenner mit einem Brennerschaft (1), einem damit koaxial verbundenen, ein Kontaktrohr (9) haltenden Düsenstock (8) sowie einer den Düsenstock (8) und das Kontaktrohr (9) mit Distanz umgreifenden Gasdüse (5), die gegenüber dem mit Kühlleitungen (12, 13, 14) versehenen Brennerschaft (1) durch eine zwischengeschaltete Isolierbuchse (3) elektrisch isoliert ist. Der Brennerschaft (1) weist einen im Durchmesser kleineren Ansatz (2) auf, der in die Isolierbuchse (3) hineinragt. Die Isolierbuchse (3) ist als eine dünnwandige, mit einer hart-anodischen Oberflächenschicht versehene Hülse aus einer Aluminium-Legierung ausgebildet, die an einem Ende einen Bund (4) aufweist und deren anderem Ende ein Zwischen-stück (7) zugeordnet ist. Die derart ausgebildete und ange-ordnete Isolierbuchse (3) ermöglicht einen ungehinderten Wärmeübergang von der außen aufgesteckten Gasdüse (5) durch die Isolierbuchse (3) und den Ansatz (2) in das im ring-förmigen Hohlraum (14) vorhandene Kühlmedium, das durch die Leitungen (12, 13) zu- bzw. abgeführt wird.

FIG.1

EP 0 041 165 A1

## Brenner für das Schutzgasschweißen

Die Erfindung bezieht sich auf einen Brenner für das Schutzgasschweißen, bestehend aus einem Brennerschaft und einem damit koaxial verbundenen, ein Kontaktrohr haltenden Düsenstock, sowie aus einer den Düsenstock und das Kontaktrohr mit Distanz umgreifenden Gasdüse, die gegenüber dem mit Kühlleitungen versehenen Brennerschaft durch Zwischenfügung einer Isolierbuchse elektrisch isoliert ist.

Vorbekannte Brenner für das Schutzgasschweißen werden je nachdem, welche thermische Leistung gefordert wird, unterschiedlich gestaltet. In jedem Fall ist es erforderlich, die Gasdüse elektrisch von den anderen Teilen des Brenners zu isolieren. Bei einem bekannten Brenner für z.B. 250 A *(Ampere)* ist am Brennerschaft ein Düsenstock mit Hilfe einer Überwurfmutter koaxial angeflanscht. Auf der Außenmantelfläche des Düsenstockes sitzt eine elektrisch isolierende Hülse aus einem keramischen Werkstoff, die ihrerseits an der Außenfläche die Gasdüse trägt. Die Kühlleitungen befinden sich lediglich im Brennerschaft und enden in einer beträchtlichen Distanz vor der Stelle des Brenners, an der die größten Temperaturen entstehen. Andererseits wirkt sich zwar die elektrisch isolierende Hülse für den Zweck der elektrischen Isolation günstig aus; sie kann auch dünnwandig ausgebildet sein, hat aber den entscheidenden Nachteil, daß sie den Wärmefluß zwischen dem Brennerschaft und der Gasdüse empfindlich hemmt. Ein solcher Brenner weist zwar geringe Dimensionen auf, läßt sich aber nicht für höhere thermische Leistungen umgestalten.

Die für hohe thermische Leistungen, z.B. 450 A (Ampere) bestimmten Brenner sind anders ausgestaltet. Hier umgreift der Brennerschaft mindestens in einem Teilbereich die Gasdüse, wobei die Querschnittsdimensionen deswegen besonders groß sind, weil im Brennerschaft die Kühlmitte-lleitungen untergebracht werden müssen. Die elektrische Isolation befindet sich bei dieser Konstruktion an der Innenseite der Gasdüse und verläuft über die ganze Länge des Brennerschaftes, was erforderlich macht, daß der Brennerschaft aus mehreren, koaxial ineinander gefügten Teilen bestehen muß. Die höhere thermische Leistung eines solchen Brenners wird also durch eine kompakte, im Durchmesser stark vergrößerte Bauweise erkauft, wobei auch der Durchmesser der Gasdüse wesentlich größer als bei Brennern mit kleinerer thermischer Leistung sein muß.

Der Erfindung liegt die Aufgabe zugrunde, einen Brenner für hohe thermische Leistungen so zu gestalten, daß er in seinen äußeren Abmessungen klein ist und eine elektrische Isolation aufweist, welche die Kühlung des Brenners nicht behindert.

Ausgehend vom eingangs erwähnten Stand der Technik besteht das Wesen der Erfindung darin, daß der Brennerschaft mit einem im Durchmesser kleineren Ansatz in die Isolierbuchse hineinragt, die außenseitig die Gasdüse führt und daß die Kühlleitung bis in den Ansatz des Brennerschaftes geführt ist. In einem bevorzugten Ausführungsbeispiel der Erfindung besteht die Isolierbuchse aus einer dünnwandigen, mit einer hart-anodischen Oberflächenschicht versehenen Hülse aus einer Aluminium-Legierung.

Diese Konzeption der Erfindung führt überraschenderweise dazu,
daß ein Brenner für hohe thermische Leistungen, z.B. 450 A,
nicht größer gebaut ist als ein vorbekannter Brenner für eine wesentlich niedrigere thermische Leistung, z.B. 250 A. Dies hängt damit
zusammen, daß die Gasdüse im Durchmesser gleich oder sogar kleiner
als der Brennerschaft ist und daß eine elektrische Isolierung vorgesehen ist, welche den Wärmefluß zwischen Gasdüse und Kühlmittel
nicht oder nicht wesentlich behindert. Durch die Möglichkeit, die
Kühlmittelleitung, die elektrische Isolation und die Gasdüse in
einem weitgehend übereinstimmenden Bereich deckungsgleich anzuordnen, ist es gelungen, die gestellte Aufgabe in besonders einfacher und billiger Weise zu lösen.

Im Rahmen des Erfindungsgedankens bieten sich zahlreiche Ausgestaltungen an. So ist es beispielsweise zweckmäßig, daß die Isolierbuchse mit einem Isolierzwischenstück koaxial verbunden ist, dessen Bohrungswandung auf dem Düsenstock geführt ist. Auf diese Weise
wird erreicht, daß die Isolierbuchse einerseits eine Isolation
der Gasdüse gegenüber dem Ansatz des Brennerschaftes herbeiführt,
aber auch andererseits gegenüber dem Düsenstock, der innerhalb des
Ansatzes geführt ist. Die Zweiteiligkeit der Isolierbuchse bringt
erhebliche Einsparungen an Material und Arbeitszeit mit sich. Vorteilhafterweise begrenzt das Isolierzwischenstück stirnseitig den
Ansatz des Brennerschaftes, gegebenenfalls mit Distanz, und distanziert diesen von der Gasdüse in axialer Richtung. Um den Zusammenbau der Teile zu vereinfachen, ist die Außenmantelfläche der dem
Isolierzwischenstück zugekehrten Seite der Isolierbuchse sich verjüngend ausgebildet. Demgemäß weist die Außenmantelfläche des
Isolierzwischenstückes gegenüber der sie umgreifenden Gasdüse ein
Spiel auf.

Diese Querschnittsgestaltung des Brenners weist unter anderem auch den Vorteil auf, daß das Kontaktrohr unmittelbar am Ansatz des Brennerrohres befestigt, insbesondere angeschraubt, werden kann.

Obwohl der Ansatz des Brennerschaftes notwendigerweise im Durchmesser kleiner als der Brennerschaft selbst ausgebildet sein muß, bietet die erfindungsgemäße Gestaltung die Möglichkeit, im Ansatz des Brennerschaftes einen ringförmig umlaufenden Hohlraum zu bilden, in dem die Zu- und Rückführleitung für das Kühlmedium mündet. Dadurch wird erstmals die Möglichkeit geschaffen, den innerhalb der elektrischen Isolierbuchse befindlichen Raum zu kühlen.

Gegenstand der Erfindung ist auch eine Ausgestaltung des Brenners, wonach der Brennerschaft aus einem Rohr besteht, in dem eine koaxial zum Rohr sich erstreckende, beidseitig zum Rohrinnenmantel längs durchlaufende Hohlräume bildende Trennwand angeordnet ist, die sich bis in den Ansatz des Brennerschaftes erstreckt und dort durch Querschnitts-Verminderung den ringförmig umlaufenden Hohlraum bildet. Auch diese Maßnahme trägt wesentlich dazu bei, die Abmessungen des erfindungsgemäßen Brenners so minimal wie möglich zu halten und damit wesentliche Gewichts- und Kostenersparnisse zu erreichen.

Einzelheiten der Erfindung sind in der Zeichnung schematisch und beispielsweise dargestellt. Es zeigen:

Fig. 1: Einen Längsschnitt durch den unteren Teil eines Brenners für Schutzgasschweißen und

Fig. 2: Einen Querschnitt nach der Linie II-II durch
den Brennerschaft gemäß Fig. 1.

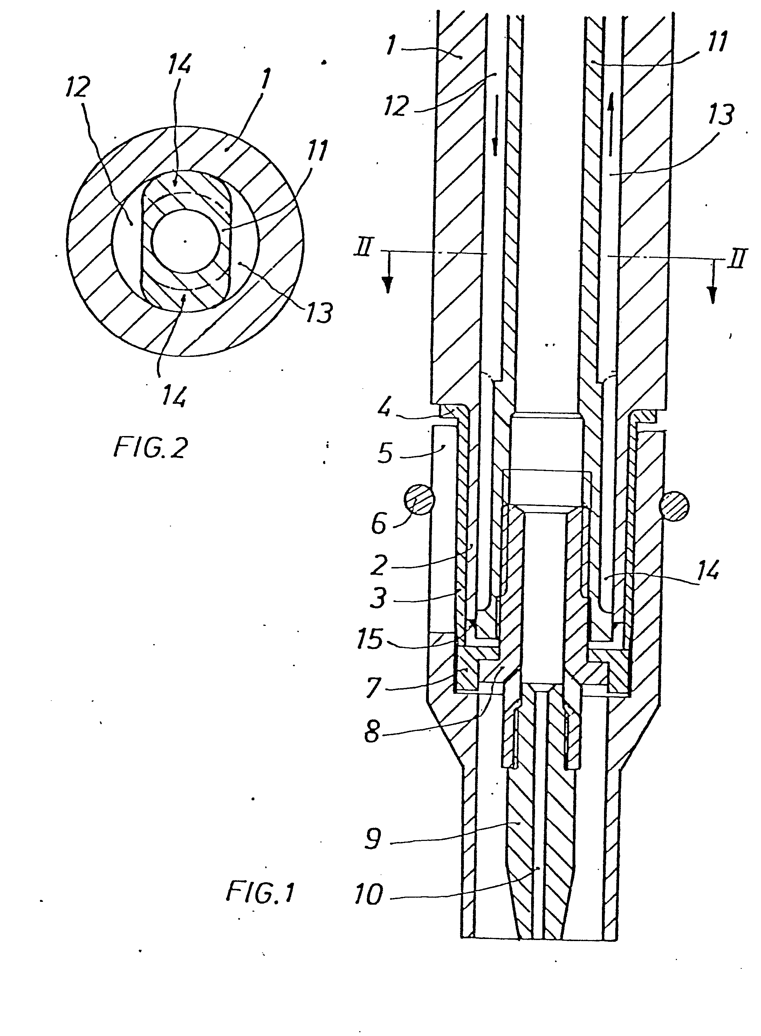

Im Ausführungsbeispiel der Fig. 1 ist ein Brennerschaft 1 für Schutzgasschweißen im unteren Teilbereich im Längsschnit dargestellt. Dieser Brennerschaft 1 weist an seinem unteren Ende einen im Querschnitt verjüngten Ansatz 2 auf, mit dem durch Verschraubung ein Düsenstock 8 verbunden ist. Dieser Düsenstock 8 trägt ebenfalls durch Verschraubung ein Kontaktrohr 9, dessen Bohrung 10 zur Führung des Schweißdrahtes bestimmt ist.

Der Brennerschaft 1 hat eine doppelte Funktion, indem er einerseits eine Gasdüse 5 halten und führen soll, die aber andererseits gegenüber dem Brennerschaft 1 elektrisch isoliert sein muß. Darüber hinaus ergibt sich die Bedingung, die im Bereich der Gasdüse 5 entstehende hohe Erwärmung mit hohem Wirkungsgrad abzuleiten.

Zu diesem Zweck ist auf der Außenfläche des Ansatzes 2 des Brennerschaftes 1 eine möglichst dünnwandige Isolierbuchse 3 geführt, die wegen der Dünnwandigkeit einen Bund 4 aufweist, der den Brennerschaft 1 von der Gasdüse 5 distanziert. Diese Buchse 3 muß elektrich isolierend sein. Es hat sich als besonders vorteilhaft erwiesen, hierzu eine dünnwandige, mit einer hart-anodischen Oberflächenschicht versehene Hülse aus einer Aluminium-Legierung zu verwenden. Aluminium ist an sich ein elektrisch leitendes Metall. Durch die hart-anodische Oberflächengestaltung wird diese Buchse aber elektrisch isolierend, ohne daß dadurch der thermische Fluß behindert wird. Es findet also nach beiden Seiten, senkrecht zur Brennerachse gesehen, ein ungehinderter Wärmeübergang statt.

Der Ansatz 2 des Brennerschaftes 1 weist einen ringförmigen Hohl-

- 6 -

0041165

raum 14 auf, in den die Zuführleitung 12 und die Abführleitung 13 für das Kühlmedium münden. Aus der Darstellung der Fig. 1 erkennt man, daß dieser ringförmige Hohlraum 14 nahezu über die gesamte Länge der Isolierbuchse 3 reicht, sodaß über diese Länge ein ungehinderter Wärmeabfluß entstehen kann.

Es besteht nun das Problem, wie man eine im Brennerschaft 1 angeordnete Zu- und Abführleitung 12, 13 mit einem ringförmigen Hohlraum 14 im Ansatz 2 des Brennerschaftes 1 verbinden kann, damit ein ordnungsgemäßer Transport des Kühlmittels erfolgt. Wie die Fig. 2 zeigt, wird der Hohlraum des Brennerschaftes 1, der vorzugsweise als Rohr ausgebildet ist, von einer Trennwand 11 durchsetzt, die im Bereich des Brennerschaftes 1 zwei Leitungen 12, 13 bildet, welche als Zu- und Abführleitung verwendbar sind. Dort, wo diese Trennwand 11 in den Ansatz 2 des Brennerschaftes 1 übergeht, ist die Trennwand 11 zurückversetzt ausgebildet, wodurch der ringförmige Hohlraum 14 entsteht. Das die Zuführleitung 12 durchströmende Kühlmedium kann also durch den ringförmigen Hohlraum 14 in Richtung zur Abführleitung 13 gefördert werden und somit die Wärmeabfuhr sicherstellen.

Es erweist sich als zweckmäßig, die Isolierbuchse 3 zweigeteilt auszubilden, sodaß ein Isolierzwischenstück 7 entsteht. Dieses Zwischenstück 7 isoliert elektrisch die Gasdüse 5 gegenüber dem Düsenstock 8 und schafft eine Distanz des Ansatzes 2 zur Gasdüse 5. Das Isolierzwischenstück 7 ist an die Isolierbuchse 3 lediglich angestoßen, welche ihrerseits eine konische Abschrägung in Richtung zum Isolierzwischenstück 7 besitzt, was die Montage wesentlich erleichtert. Das Isolierzwischenstück 7 ist außerdem mit Spiel gegenüber der Gasdüse 5 versehen.

0041165

Mit 6 ist ein Ring bezeichnet, der die Gasdüse 5 in ihrer Lage auf der Isolierbuchse 3 sichert.

Stückliste

1) Brennerschaft

2) Ansatz

3) Isolierbuchse

4) Bund

5) Gasdüse

6) Ring

7) Isolierzwischenstück

8) Düsenstock

9) Kont-aktrohr

10) Bohrung zur Führung des Schweißdrahtes

11) Trennwand

12) Zuführleitung

13) Abführleitung

14) ringförmiger Hohlraum

15) Schweißverbindung

16)

17)

18)

19)

20)

Patentansprüche

1) Brenner für das Schutzgasschweißen, bestehend aus einem Brennerschaft und einem damit koaxial verbundenen, ein Kontaktrohr haltenden Düsenstock sowie aus einer den Düsenstock und das Kontaktrohr mit Distanz umgreifenden Gasdüse, die gegenüber dem mit Kühlleitungen versehenen Brennerschaft durch Zwischenfügung einer Isolierbuchse elektrisch isoliert ist, dadurch g e k e n n z e i c h n e t, daß der Brennerschaft (1) mit einem im Durchmesser kleineren Ansatz (2) in die Isolierbuchse (3) hineinragt, die außenseitig die Gasdüse (5) führt, und daß die Kühlleitung (12, 13, 14) bis in den Ansatz (2) des Brennerschaftes (1) geführt ist.

2) Brenner nach Anspruch 1, dadurch g e k e n n z e i c h n e t, daß die Isolierbuchse (3) aus einer dünnwandigen, mit einer hart-anodischen Oberflächenschicht versehenen Hülse aus einer Aluminium-Legierung besteht.

3) Brenner nach Anspruch 1 oder 2, dadurch g e k e n n z e i c h - n e t , daß die Isolierbuchse (3) mit einem Isolierzwischenstück (7) koaxial verbunden ist, dessen Bohrungswandung auf dem Düsenstock (8) geführt ist.

4) Brenner nach Anspruch 3, dadurch g e k e n n z e i c h n e t, daß das Isolierzwischenstück (7) stirnseitig den Ansatz (2) des Brennerschaftes (1), gegebenenfalls mit Distanz, begrenzt und die-

sen von der Gasdüse (5) in axialer Richtung distanziert.

5) Brenner nach Anspruch 1 oder folgende, dadurch g e k e n n -
z e i c h n e t , daß die Außenmantelfläche der dem Isolierzwischenstück (7) zugekehrten Seite der Isolierbuchse (3) sich verjüngend ausgebildet ist.

6) Brenner nach Anspruch 3 oder 4, dadurch g e k e n n z e i c h -
n e t , daß die Außenmantelfläche des Isolierzwischenstückes (7)
gegenüber der sie umgreifenden Gasdüse (5) ein Spiel aufweist.

7) Brenner nach Anspruch 1 oder einem der folgenden, dadurch g e -
k e n n z e i c h n e t , daß der Ansatz (2) des Brennerschaftes (1)
einen ringförmig umlaufenden Hohlraum (14) aufweist, in dem die
Zu- und Rückführleitung (12, 13) für das Kühlmedium mündet.

8) Brenner nach Anspruch 1 oder einem der folgenden, dadurch g e -
k e n n z e i c h n e t , daß der Brennerschaft (1) aus einem
Rohr besteht, in dem eine koaxial zum Rohr sich erstreckende,
beidseitig zum Rohrinnenmantel längs durchlaufende Hohlräume (12,
13) bildende Trennwand (11) angeordnet ist, die sich bis in den
Ansatz (2) des Brennerschaftes (1) erstreckt und dort durch
Querschnitts-Verminderung den ringförmig umlaufenden Hohlraum
(14) bildet.

FIG.2

FIG.1

**Europäisches Patentamt**

# EUROPÄISCHER RECHERCHENBERICHT

## EINSCHLÄGIGE DOKUMENTE

| Kategorie | Kennzeichnung des Dokuments mit Angabe. soweit erforderlich, der maßgeblichen Teile | betrifft Anspruch |
|---|---|---|
| | CH - A - 358 525 (OERLIKON) | 1,3-8 |
| | * Figur 9; Seite 2, Zeilen 19-82 * | |
| | --- | |
| | EP - A - 0 003 780 (MESSER GRIES-HEIM) | 1,3-8 |
| | * Ansprüche * | |
| | --- | |
| | FR - A - 2 107 427 (UNION CARBIDE) | 2,7,8 |
| | * Seite 2, Zeile 20 * | |
| | --- | |
| | FR - A - 2 388 628 (PHILIPS) | 1,3-8 |
| | * Figuren * | |
| | & NL - A - 77 04527 | |
| | --- | |
| | US - A - 3 529 126 (REEH) | 3-8 |
| | * Figuren * | |
| | & FR - A - 1 564.141 | |
| | --- | |
| | US - A - 3 731 048 (OGDEN) | 1,3-8 |
| | * Figuren 1 und 2 * | |
| | ---------- | |

**KLASSIFIKATION DER ANMELDUNG (Int. Cl.³)**

B 23 K 9/28

**RECHERCHIERTE SACHGEBIETE (Int. Cl.³)**

B 23 K 9/28

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

· Der vorliegende Recherchenbericht wurde für alle Patentansprüche erstellt.

| Recherchenort Den Haag | Abschlußdatum der Recherche 15. September 1981 | Prüfer HOORNAERT |
|---|---|---|

EPA form 1503.1 06.78